(19) Europäisches Patentamt
European Patent Office
Office européen des brevets

(11) **EP 1 877 760 B1**

(12) **EUROPÄISCHE PATENTSCHRIFT**

(45) Veröffentlichungstag und Bekanntmachung des Hinweises auf die Patenterteilung:
**31.10.2012 Patentblatt 2012/44**

(21) Anmeldenummer: **06742691.6**

(22) Anmeldetag: **26.04.2006**

(51) Int Cl.:
***G01N 23/20*** *(2006.01)*

(86) Internationale Anmeldenummer:
**PCT/EP2006/003839**

(87) Internationale Veröffentlichungsnummer:
**WO 2006/117106 (09.11.2006 Gazette 2006/45)**

(54) **VERFAHREN UND VORRICHTUNG ZUR ONLINE-BESTIMMUNG DES ASCHEGEHALTS EINER AUF EINEM FÖRDERMITTEL GEFÖRDERTEN SUBSTANZ UND VORRICHTUNG ZUR DURCHFÜHRUNG EINER SOLCHEN ONLINE-BESTIMMUNG**

METHOD AND DEVICE FOR THE ONLINE DETERMINATION OF THE ASH CONTENT OF A SUBSTANCE CONVEYED ON A CONVEYING MEANS, AND DEVICE FOR CARRYING OUT SUCH AN ONLINE DETERMINATION

PROCEDE ET DISPOSITIF POUR DETERMINER EN LIGNE LA TENEUR EN CENDRES D'UNE SUBSTANCE TRANSPORTEE SUR UN SYSTEME DE TRANSPORT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.04.2005 DE 102005020567**

(43) Veröffentlichungstag der Anmeldung:
**16.01.2008 Patentblatt 2008/03**

(73) Patentinhaber: **Katz, Elisabeth
72226 Simmersfeld (DE)**

(72) Erfinder: **KLEIN, Albert
Simmersfeld (DE)**

(74) Vertreter: **Schön, Thilo et al
Patentanwälte
Frank Wacker Schön
Schwarzwaldstrasse 1A
75173 Pforzheim (DE)**

(56) Entgegenhaltungen:
**DE-A1- 10 230 990     GB-A- 2 223 574
US-A- 4 486 894     US-A- 5 506 406**

• YAZDI M ET AL: "Dual-energy gamma-ray technique for quantitative measurement of coal ash in the Shahroud mine, Iran" INT. J. COAL GEOL.; INTERNATIONAL JOURNAL OF COAL GEOLOGY AUGUST 2003, Bd. 55, Nr. 2-4, August 2003 (2003-08), Seiten 151-156, XP002389084

**Beschreibung**

Technisches Gebiet  der Erfindung

Die Erfindung betrifft ein Verfahren zur Online-Bestimmung des Aschegehalts einer auf einem Förderband geförderten Substanz nach dem Oberbegriff des Anspruchs 1.

Stand der Technik

In der Bergwerks- und Hüttentechnik ist es bekannt, radiometrische Methoden zur Online-Analyse von beispielsweise auf Förderbändern geförderten Materialien einzusetzen. Eine Fragestellung, die hierbei auftritt, ist beispielsweise die Frage nach dem Aschegehalt einer Substanz, insbesondere der Aschegehalt von Koks oder Kohle. Hierzu ist beispielsweise die sogenannte Dual-Energy-Methode bekannt. Hierbei wird die zu messende Substanz mit zwei Gamma- oder Röntgenstrahlen unterschiedlicher Energie durchstrahlt. Beispielsweise wird eine $Cs^{137}$-Quelle für die Hochenergie-Messstrecke und eine $Am^{241}$-Quelle für die Niederenergie-Messstrecke verwendet. Der Ascheanteil der durchstrahlten Substanz, beispielsweise der Kohle, lässt sich aufgrund des unterschiedlichen Absvrptionsverhaltens der beiden Strahlen errechnen. Diese Methode ist beispielsweise in YAZDI M ET AL: "Dual-energy gamma-ray technique for quantitative measurement of coal ash in the Shahround mine, Iran" INT. J. COAL GEOL.; INTERNATIONAL JOURNAL OF COAL GEOLOGY AUGUST 2003, Bd. 55 Nr. 2-4, August 2003 (2003-08), Seiten 151-156, beschrieben.

Die Methode beruht darauf, dass durch das Absorptionsverhalten des hochenergetischen Strahls das Flächengewicht der Substanz ermittelt wird und man durch das Absorptionsverhalten des niederenergetischen Strahls zusätzlich auf die mittlere Ordnungszahl der in der Substanz vorhandenen Atome schließen kann. Diese Methode arbeitet berührungslos und kann bis zu Korngrößen bis 100 mm, in Sonderfällen auch darüber, eingesetzt werden. Sie liefert nicht in allen Anwendungsfällen befriedigend genaue Ergebnisse.

In der GB 2 223 574 A ist eine Methode zur Bestimmung des Aschegehalts in einem Kohleschlamm beschrieben, bei der in einer Messzelle die Transmission eines hochenergetischen Gammastrahls gemessen wird und bei der in einer weiteren Messzelle die Probe mit einem niederenergetischen Gammastrahl bestrahlt und das rückgestreute Signal gemessen wird.

Gegenstand der Erfindung

Hiervon ausgehend ist es Aufgabe der Erfindung, ein Verfahren zu schaffen, mit dem eine verbesserte Genauigkeit bei der Online-Bestimmung des Aschegehalts einer Substanz erzielt werden kann.

Diese Aufgabe wird durch ein Verfahren mit den Merkmalen des Anspruchs 1 gelöst.

Es hat sich herausgestellt, dass die Genauigkeit der Messergebnisse häufig dann unbefriedigend ist, wenn sich die chemische Zusammensetzung der Asche ändert. Insbesondere wenn sich die Konzentration schwerer Elemente, wie Calcium oder Eisen, sowie Elemente mit höherer Ordnungszahl ändert, führt dies zu einer fehlerhaften Bestimmung des Aschegehalts.

Erfindungsgemäß wird deshalb zusätzlich eine Röntgenfluoreszenz-Messung durchgeführt, in deren Spektrum man insbesondere die $K_\alpha$-Linien dieser

Elemente findet. Diese Information wird dann zur Korrektur des Messergebnisses benutzt. Dadurch, dass man lediglich $K_\alpha$-Strahlung relativ schwerer Elemente messen muss, deren Energie relativ hoch ist und durch Luftabsorption nicht wesentlich gestört wird, ist die Durchführung der Röntgenfluoreszenz-Messung messtechnisch relativ einfach und ein relativ großer Abstand des Röntgegenfluoreszenz-Detektors von der Probenoberfläche ist realisierbar. Ein typischer Abstand ist ca. 20 cm von der Oberfläche der Substanz.

Das Flächengewicht der Substanz und die Bestimmung der mittleren Ordnungszahl wird mittels einer sogenannten und oben bereits erwähnten Dual-Energy-Messung ermittelt. Hierbei wird die Substanz von Röntgen- oder Gammastrahlen unterschiedlicher Energie durchstrahlt.

Vorzugsweise sitzt der benötigte Röntgenfluoreszenzdetektor auf derselben Seite der Probe wie die anregende Quelle, wozu vorzugsweise eine der beiden Quellen der Dual-Energy-Messung gleichzeitig als Anregungsquelle verwendet wird. Durch eine solche Anordnung ergibt sich eine Geometrieabhängigkeit der Messergebnisse, die kompensiert werden muss, wozu weiterhin wird der Abstand zwischen Probenoberfläche und Röntgenfluoreszentdetektor ständig gemessen wird.

Die Erfindung wird nun anhand von Ausführungsbeispielen näher erläutert. Hierbei zeigen:

Kurzbeschreibung der Zeichnungen

Figur 1    Eine schematische Darstellung einer Vorrichtung zur Ausführung des erfindungsgemäßen Verfahrens.

Figur 2    Eine zweite Ausführungsform einer Vorrichtung zur Ausführung des erfindungsgemäßen Verfahrens in einer schematischen Darstellung und

Figur 3    einen Schnitt entlang der Ebene A-A aus Figur 2.

Beschreibung bevorzugter Ausführungsformen

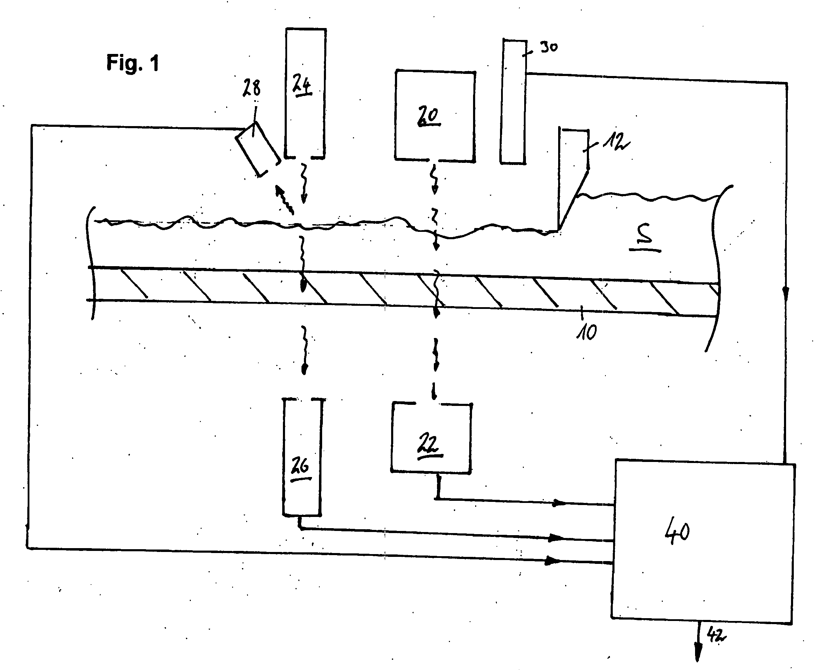

Die Figur 1 zeigt schematisch eine Vorrichtung zur Online-Bestimmung des Aschegehalts der auf dem Förderband 10 geförderten Substanz S. Zunächst wird die Substanz S mittels des Pfluges 12 eingeebnet, wobei je nach Körnigkeit der Substanz S immer noch eine gewisse Oberflächenunebenheit verbleiben kann.

Oberhalb des Förderbandes 10 sind eine $Cs^{137}$-Quelle 20, eine $Am^{241}$-Quelle 24, ein Röntgenfluoreszenzdetektor 28 und ein Abstandsmesser 30 angeordnet. Unterhalb des Förderbandes 10 befinden sich erster Transmissionsdetektor 22 und zweiter Transmissionsdetektor 26. Erster Transmissionsdetektor 22, zweiter Transmissionsdetektor 26, Röntgenfluoreszenzdetektor 28 und gegebenenfalls Abstandsmesser 30 sind mit der Auswerteeinheit 40 verbunden, welche aus den ihr gelieferten Messdaten gegebenenfalls unter weiterer Zuhilfenahme gespeicherter Eichkurven den Aschegehalt der auf dem Förderband 10 geförderten Substanz S errechnet und über einen Ausgang 42 ausgibt.

Die $Cs^{137}$-Quelle 20 und der erste Transmissionsdetektor 22 bilden die Hochenergie-Transmissionsmessstrecke, welche der Bestimmung des Flächengewichtes dient. Hierbei wird die Substanz von oben nach unten durchstrahlt, ein umgekehrter Aufbau ist jedoch auch möglich. Die Energie der von der $Cs^{137}$-Quelle abgegebenen Gammastrahlung beträgt 660 keV. Die $Am^{241}$-Quelle und der zweite Transmissionsdetektor 26 bilden die Niederenergie-Transmissionsmessstrecke zur Bestimmung der mittleren Ordnungszahl. Die Energie der von der $Am^{241}$-Quelle abgehenden Gammastrahlung beträgt 60 keV. Diese beiden Strecken bilden eine "klassische" Dual-Energy-Messanordnung, mit der der Aschegehalt der Substanz S zumindest grundsätzlich bestimmt werden kann. Statt Gammaquellen können auch Röntgenröhren mit unterschiedlichen Beschleunigungsspannungen eingesetzt werden. Die Röntgenröhre für die Hochenergie-Messstrecke sollte hierbei eine Beschleunigungsspannung von über 300 kV, die Röntgenröhre für die Niederenergie-Messstrecke eine Beschleunigungsspannung von unter 100 kV haben.

Wie die Ermittlung des Aschegehalts anhand der so gewonnenen Daten erfolgt, ist in der Technik bekannt, wird im folgenden jedoch nochmals kurz dargestellt:

Für die Transmission von Gammastrahlen gilt das Absorptionsgesetz:

$$I = I_0\, e^{-\mu \rho d}$$

I:    Intensität

Io:    Intensität bei leerer Messstrecke

$\mu$:    Absorptionskoeffizient

$\rho$:    Dichte des Materials

d:    Dicke der Materialschicht

Für niederenergetische Strahlen, also beispielsweise für die zweite Transmissionsmessstrecke mit der $Am^{241}$-Quelle, ist der Absorptionskoeffizient abhängig von der Ordnungszahl Z. Der Absorptionskoeffizient eines Stoffgemisches lässt sich wie folgt darstellen:

$$\overline{\mu(z)} = \sum c_i \cdot \mu_i(z)$$

wobei $c_i$ die Konzentration ist und

$$\sum c_i = 1 \quad \text{gilt.}$$

Bei der klassischen Dual-Energy-Aschegehaltsmessung berechnet man den Aschegehalt A gemäß:

$$A = a \cdot \frac{\ln\left(\dfrac{I}{I_0}\right)_{LE}}{\ln\left(\dfrac{I}{I_o}\right)_{HE}} + k = a \cdot \frac{\left(-\overline{\mu(z) \cdot \rho \cdot d}\right)_{LE}}{-\mu \cdot \rho \cdot d_{HE}} + k = a \cdot \frac{\overline{\mu(z)}_{LE}}{\mu_{HE}} + k \quad ,$$

wobei

LE die Niederenergie-Messstrecke und HE die Hochenergie-Messstrecke bezeichnet.

a und k sind die Kalibrierkoeffizienten. Erfindungsgemäß werden diese Koeffizienten zumindest teilweise durch eine Röntgenfluoreszenzmessung bestimmt. Zur Durchführung dieser Messung dient der Röntgenfluoreszenzdetektor 28, welcher vorzugsweise die Anregungsstrahlung der Am[241]-Quelle 24 nutzt. Aus diesem Grunde ist es wichtig, dass sich die Am[241]-Quelle 24 und der Röntgenfluoreszenzdetektor oberhalb der Substanz befinden, da sonst die Röntgenfluoreszenzmessung durch das Förderband gestört würde. Hierbei werden die $K_\alpha$-Linien einiger schwerer Elemente wie Calcium, Eisen und Titan gemessen. Die hier interessierende Röntgenfluoreszenzstrahlung ist ausreichend energiereich, dass der Röntgenfluoreszenzdetektor 28 mehr als 10 cm, vorzugsweise ca. 20 cm von der Probenoberfläche beabstandet werden kann, ohne dass die Luftabsorption einen zu starken Einfluss gewinnt. Da jedoch die Intensität der Fluoreszenzstrahlung quadratisch mit dem Abstand abnimmt, ist es wichtig, den mittleren Abstand zwischen Probenoberfläche und Röntgenfluoreszenzdetektor 28 zu kennen. Dies kann dadurch geschehen, dass der Abstand ständig gemessen wird. Hierzu dient der Abstandsmesser 30. Es ist jedoch auch möglich, die Schichtdicke der Substanz und somit bei gegebener Geometrie den Abstand von der Probenoberfläche zu den einzelnen Messgeräten aus dem Absorptionsverhalten in der Hochenergie-Messstrecke zu bestimmen.

Um die auf die Substanz auftreffende Strahlungsintensität auch bei sich ändernder Schichtdicke der Substanz S konstant zu halten, kann zwischen der Am[241]-Quelle, beziehungsweise einer diese ersetzende Röntgenröhre, und die Oberfläche der Substanz S eine Röntgenhalblinse als Kollimator angeordnet werden. Das quadratische Abstandsgesetz muss dann nur noch für den Abstand zwischen der Oberfläche der Substanz und dem Röntgenfluoreszenzdetektor berücksichtigt werden, was die mathematische Behandlung vereinfachen kann.

Wie bereits erwähnt, werden einige schwere Elemente mit der zusätzlichen Röntgenfluoreszenzmessung bestimmt. Die Kalibrierung für diese Elemente erfolgt nach dem Stand der Technik. Im einfachsten Fall kann man die Intensitäten der Peaks $I_p$ als Maß für die Konzentration nehmen, wobei die $k_i$ Konstanten sind:

$$c_i = k_i I_{pi}$$

Zur Kompensation der Elementarzusammensetzung der Asche wird mit der Kalibrierung der Dual-Energy-Messung auf die mittlere Elementarzusammensetzung der Asche (Arbeitspunkt) kalibriert. Abweichungen der mit der Röntgenfluoreszenz-Analyse erfassten Elemente der Asche vom Arbeitspunkt werden nun kompensiert gemäß:

$$A = a \cdot \frac{\ln\left(\dfrac{I}{I_0}\right)_{LE}}{\ln\left(\dfrac{I}{I_o}\right)_{HE}} - \sum \mu_i \Delta c_i + k^*$$

Hierbei ist $\Delta c_i$ die Abweichung der Konzentration des i-ten Elements vom Mittelwert, k* ist eine Konstante.

Arbeitet man anstelle einer kalibrierten Röntgenfluoreszenzmessstrecke, die die Konzentrationen der gewünschten Elemente bestimmt, mit den Peak-Intensitäten, kann die Kalibrierung der Aschegehaltsmessung in einer Gesamtregression erfolgen:

$$A = a \cdot \frac{\ln\left(\frac{I}{I_0}\right)_{LE}}{\ln\left(\frac{I}{I_0}\right)_{HE}} + b_1 \Delta I_{p1} + b_2 \Delta I_{p2} + \ldots + k *$$

Da die Röntgenfluoreszenzmessstrecke hier nicht kalibriert ist, benötigt man für die Kalibrierung lediglich den Laborwert des Aschegehalts. Der Laboraufwand ist also nicht größer, als er bei der Dual-Energy-Methode ohnehin notwendig ist.

Die hier dargestellten Rechenoperationen werden von der Auswerteeinheit 40 ausgeführt.

Wie man sieht, spielen die absoluten Intensitäten bei der Röntgenfluoreszenzmessung eine Rolle. Deshalb ist es sehr wichtig, den Abstand zwischen Probenoberfläche und Röntgenfluoreszenzdetektor, idealerweise auch den Abstand zwischen der Am [241]-Quelle und Probenoberfläche genau zu kennen oder konstant zu halten. Hierzu kann der Abstand gemessen werden und dieser Abstandsmesswert zur Korrektur herangezogen werden.

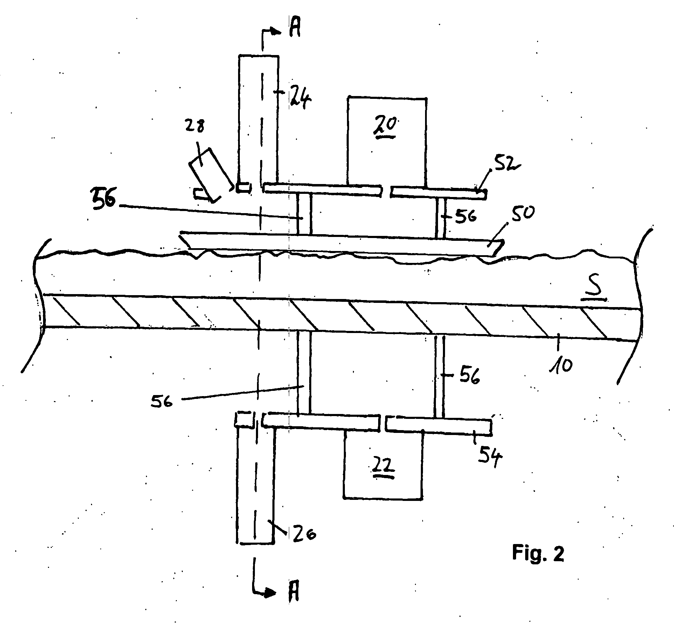

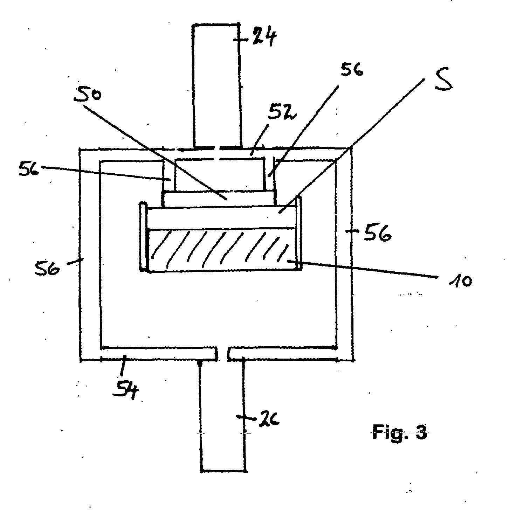

Die Figuren 2 und 3 zeigen eine Möglichkeit, wie diese Abstände immer gleich gehalten werden können, ohne die beiden Transmissionsmessungen negativ zu beeinflussen. Die Messvorrichtung weist hier eine Gleitplatte 50 auf, die auf der Oberfläche der zu messenden Substanz S gleitet oder schwimmt. Über Träger 56 sind mit dieser Gleitplatte 50 eine obere Befestigungsplatte 52 und eine untere Befestigungsplatte 54 starr verbunden. Hierdurch ist der Abstand zwischen Cs [137]-Quelle 20 und erstem Transmissionsdetektor 22, sowie der Abstand zwischen der Am [241]-Quelle 24 und dem zweiten Transmissionsdetektor 26 immer gleich. Weiterhin ist der Abstand zwischen der Am[241]-Quelle 24 und der Probenoberfläche sowie zwischen der Probenoberfläche und dem Röntgenfluoreszenzdetektor 28 immer gleich. Da sowohl für die Dual-Energy als für die Röntgenfluoreszenzmessung die Schichtdicke der zu messenden Substanz S keine Rolle spielt, stellt diese Anordnung auch bei sich ändernder Schichtdicke gleichbleibende Messergebnisse sicher. Eine solche Anordnung mit einer Gleit- oder Schwimmplatte 50 ist auch in anderen Anwendungsfällen, bei denen radiometrische Methoden eingesetzt werden, anwendbar.

Bezugszeichenliste

10   Förderband

12   Pflug

20   Cs[137]-Quelle

22   erster Transmissionsdetektor

24   Am[241]-Quelle

26   zweiter Transmissionsdetektor

28   Röntgenfluoreszenzdetektor

30   Abstandsmesser

40   Auswerteeinheit

50   Gleitplatte

52   obere Befestigungsplatte

54   untere Befestigungsplatte

**Patentansprüche**

1. Verfahren zur Online-Bestimmung des Aschegehalts einer auf einem Förderband (10) geförderten Substanz mit einer ersten Messung zur Bestimmung des Flächengewichts der Substanz und einer zweiten Messung zur Bestimmung der mittleren Ordnungszahl der in der Substanz vorhandenen Atome, wobei zur Bestimmung des Flächengewichts die Probe von einer hochenergetischen Röntgen- oder Gammastrahlung (20) durchstrahlt wird und zur Bestimmung der mittleren Ordnungszahl die Probe von einer niederenergetischen Röntgen- oder Gammastrahlung (24) durchstrahlt wird,
   **dadurch gekennzeichnet, dass** zusätzlich eine Röntgenfluoreszenzmessung mittels eines Röntgenfluoreszenzdetektors (28) durchgeführt und zur Korrektur des Messergebnisses benutzt wird und dass der Abstand zwischen Probenoberfläche und Röntgenfluoreszenzdetektor (28) ständig gemessen und zur Korrektur herangezogen wird.

2. Verfahren nach Anspruch 1, **dadurch gekennzeichnet, dass** zur Abstandsmessung die Transmissionsmessung der hochenergetischen Strahlung (20) verwendet wird.

3. Verfahren nach Anspruch 1 oder Anspruch 2, **dadurch gekennzeichnet, dass** die hochenergetische Gammastrahlung (20) von einer $Cs^{137}$-Quelle erzeugt wird.

4. Verfahren nach einem der vorangehenden Ansprüche, **dadurch gekennzeichnet, dass** die niederenergetische Gammastrahlung (24) von einer $Am^{241}$-Quelle erzeugt wird.

5. Verfahren nach Anspruch einem der vorangehenden Ansprüche, **dadurch gekennzeichnet, dass** die niederenergetischen Gamma- oder Röntgenstrahlen (24) auch als Anregungsstrahlung für die Röntgenfluoreszenzmessung dienen, wobei sich der Röntgenfluoreszenzdetektor (28) auf der selben Seite der Substanz wie die Quelle der niederenergetischen Röntgen- oder Gammastrahlung (24) befindet.

6. Verfahren nach einem der Ansprüche 1 bis 4, **dadurch gekennzeichnet, dass** der Abstand zwischen der Quelle der niederenergetischen Röntgen- oder Gammastrahlung (24) und dem Transmissionsdetektor (26) gemessen und bei der Auswertung der Transmissionsmessung berücksichtigt wird.

7. Verfahren nach Anspruch 1 und Anspruch 6, **dadurch gekennzeichnet, dass** zur Abstandsmessung die Transmissionsmessung der hochenergetischen Strahlung (20) verwendet wird.

**Claims**

1. A method for online determination of the ash content of a substance conveyed on a conveyor belt (10) with a first measurement for determining the mass per unit area of the substance and a second measurement for the determination of the mean atomic number of atoms present in the substance, wherein for determination of the mass per unit area, the sample is irradiated by high-energy X-rays or gamma radiation (20), and for determining the mean atomic number the sample is irradiated by low-energy X-ray or gamma radiation (24), **characterized in that** additionally a X-ray fluorescence measurement is carried out using a X-ray fluorescence detector (28), and is used for correcting the result of the measurement and that the distance between the sample surface and x-ray fluorescence detector (28) is measured continuously and is used for correction.

2. A method according to claim 1, **characterized in that** for the distance measurement, the transmission measurement of the high energy radiation (20) is used.

3. The method of claim 1 or claim 2, **characterized in that** the high-energy gamma rays (20) are generated from a $Cs^{137}$ source.

4. Method according to any one of the preceding claims, **characterized in that** the low-energy gamma rays (24) are generated by an $Am^{241}$ source.

5. Method according to claim any one of the preceding claims, **characterized in that** the low-energy gamma rays or X-rays (24) also serve as the excitation radiation for the X-ray fluorescence measurement, wherein the X-ray fluorescence detector(28) is on the same side of the substance, as the source of low-energy X-ray or gamma radiation (24).

6. Method according to any one of claims 1 to 4, **characterized in that** the distance between the source of low-energy X-rays or gamma radiation (24) and the transmission detector (26) is measured and taken into account in the analysis of transmission measurement.

7. The method of claim 1 and claim 6, **characterized in that** for the distance measurement, the transmission measurement of the high energy radiation (20) is used.

**Revendications**

1. Procédé pour déterminer en ligne la teneur en cendres d'une substance transportée sur un convoyeur à courroie (10), comprenant une première mesure pour déterminer le poids surfacique de la substance et une deuxième mesure pour déterminer le nombre de charge moyen des atomes présents dans la substance, l'échantillon étant traversé par un rayonnement gamma ou X de haute énergie (20) pour déterminer le poids surfacique, et l'échantillon étant traversé par un rayonnement gamma ou X de faible énergie (24) pour déterminer le nombre de charge moyen, **caractérisé en ce qu'**on met en oeuvre en outre une mesure de fluorescence X, au moyen d'un détecteur de fluorescence X (28) et pour corriger les résultats de mesure, et **en ce que** l'on mesure en continu la distance entre la surface de l'échantillon et le détecteur de fluorescence X (28) et on s'en sert pour la correction.

2. Procédé selon la revendication 1, **caractérisé en ce que** l'on utilise la mesure en transmission du rayonnement de haute énergie (20) pour la mesure de distance.

3. Procédé selon la revendication 1 ou 2, **caractérisé en ce que** l'on génère le rayonnement gamma de haute énergie (20) à l'aide d'une source $Cs^{137}$.

4. Procédé selon l'une quelconque des revendications précédentes, **caractérisé en ce que** l'on génère le rayonnement gamme de faible énergie (24) à l'aide d'une source $Am^{241}$.

5. Procédé selon l'une quelconque des revendications précédentes, **caractérisé en ce que** les rayonnements X ou gamma de faible énergie (24) servent également de rayonnement d'excitation pour la mesure de fluorescence X, le détecteur de fluorescence X (28) se trouvant du même côté de la substance que la source de rayonnement X ou gamma de faible énergie (24).

6. Procédé selon l'une quelconque des revendications 1 à 4, **caractérisé en ce que** l'on mesure la distance entre la source de rayonnement X ou gamma de faible énergie (24) et le détecteur en transmission (26) et on la prend en compte pour l'exploitation de la mesure en transmission.

7. Procédé selon la revendication 1 et la revendication 6, **caractérisé en ce que** l'on utilise la mesure en transmission du rayonnement de haute énergie (20) pour la mesure de distance.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2223574 A

**In der Beschreibung aufgeführte Nicht-Patentliteratur**

- **YAZDI M et al.** Dual-energy gamma-ray technique for quantitative measurement of coal ash in the Shahround mine, Iran. *INT. J. COAL GEOL.; INTERNATIONAL JOURNAL OF COAL GEOLOGY,* August 2003, vol. 55 (2-4), 151-156